# EUROPEAN PATENT SPECIFICATION

(11) **EP 2 588 300 B1**
(45) Date of publication and mention of the grant of the patent: **28.10.2015**
(21) Application number: 11727783.0
(22) Date of filing: 20.05.2011
(51) Int. Cl.: B29D 30/52

(54) **PROCESS AND PLANT FOR PRODUCING TYRES FOR VEHICLE WHEELS**
VERFAHREN UND ANLAGE ZUR HERSTELLUNG VON REIFEN FÜR FAHRZEUGRÄDER
PROCÉDÉ ET USINE DE FABRICATION DE PNEUS POUR ROUES DE VÉHICULE

(30) Priority: 29.06.2010 IT MI20101176; 07.07.2010 US 362171 P
(43) Date of publication of application: 08.05.2013
(73) Proprietor: Pirelli Tyre S.p.A., 20126 Milano (IT)
(72) Inventor: MANCINI, Gianni, I-20126 Milano (IT)
(74) Representative: Tansini, Elio Fabrizio
(86) International application number: PCT/IB2011/052211
(87) International publication number: WO 2012/001544

(56) References cited:
- WO-A1-2004/041520
- WO-A1-2009/040594
- FR-A- 1 355 972
- GB-A- 1 150 840
- US-A- 2 990 874
- US-A- 3 770 038
- US-A- 3 974 018
- US-A1- 2002 174 939

## Description

The present invention relates to a process and a plant for producing tyres for vehicle wheels. It is also an object of the present invention to provide a tyre for vehicle wheels obtainable through the aforesaid process and/or apparatus.

The present invention is specifically suitable for production of tyres adapted to operate on grounds of weak consistency such as on earth, mud and the like, of the type usually employed in building yards and mounted on excavators, cranes and the like, for example.

An exemplary process and apparatus for producing such a kind of tyres is disclosed by FR 1.355.972

A tyre for vehicle wheels generally comprises a bearing structure the task of which is to ensure the tyre structural integrity by withstanding the inflating pressure and the loads due to the vehicle's weight, as well as the dynamic stresses on running. The bearing structure usually comprises a carcass including one or more plies incorporating textile or metallic reinforcing cords. The plies have respectively opposite end flaps in engagement with respective annular anchoring structures integrated into the regions usually identified as "beads" and having an inner diameter substantially corresponding to a so called "fitting or seating diameter" of the tyre on a respective mounting rim.

Associated with the carcass is a belt package comprising one or more belt layers or sheets, disposed in radially superposed relationship with each other and the carcass plies, having textile or metallic reinforcing cords with a crossed orientation and/or substantially parallel to the circumferential extension direction of the tyre. A tread band of elastomeric material is applied at a radially external position to the belt structure or breaker the function of which is to transmit the dynamic stresses between the tyre and ground.

In addition, respective sidewalls of elastomeric material are applied at an axially external position to the side surfaces of the carcass structure, each extending from one of the side edges of the tread band until close to the respective annular anchoring structure to the beads.

After building of the green tyre carried out through assembly of respective components, a curing and moulding treatment is carried out which aims at determining structural stabilisation of the tyre through cross-linking of the elastomeric compositions as well as impressing the tyre with a desired tread pattern and optional distinctive graphic marks at the tyre sidewalls. To this aim, the green tyre is introduced into a curing mould comprising mutually approachable portions that, in the vicinity of the tread band, have suitable depressions and elevations adapted to penetrate the tread band for impressing it with a desired tread pattern, made up of blocks mutually separated by hollow parts and/or grooves.

The Applicant has ascertained that at least in tyres of the type usually employed on big motor-vehicles such as excavators, cranes and the like, designed to operate on grounds of weak consistency such as earth, mud and the like, as in may happen in building yards, quarries, mines, tread patterns characterised by blocks of big sizes are usually required, which normally have an elongated configuration in a direction transverse or oblique to the circumferential extension of the tyre, alternated with large grooves of great depth, for enabling the vehicle's mobility and above all for transmitting the pulling action required by the handled high loads to the ground.

In this context, the Applicant has noticed that, due to the necessity to impress the tyre with such a tread pattern concurrently with closure of the tyre into the mould, the forced displacement of important masses of raw elastomeric material becomes indispensable, for forming said blocks and grooves starting from a tread band of substantially constant thickness. This circumstance determines the requirement of transmitting high forces for closing the mould, thereby giving rise to stresses that are transmitted to the underlying bearing structure of the tyre.

The Applicant has further noticed that stresses transmitted to the tyre during closure of the mould are not homogeneously distributed but, on the contrary, are particularly concentrated at the grooves that are formed in the tread band. Consequently the belt layers and/or carcass plies are submitted to undesirable inner stresses, undulations and/or anomalous deformations of other type.

Within this context, the Applicant has perceived that by avoiding arising of these inner stresses and anomalous deformations fixed through cross-linking of the elastomeric material obtained by curing, it is substantially possible to eliminate arising of those strong unevennesses in strength that can cause early and/or at all events irregular wear of the whole tyre.

The Applicant has then found that if the tread band is built in at least two distinct working operations in which in a first working operation a layer of raw elastomeric material is formed and in a distinct working operation a plurality of blocks are laid on said layer, the shape of said blocks substantially corresponding to the block conformation to be reached in the finished tyre, at the end of the curing and moulding process a tyre substantially clear of inner stresses, undulations and permanent deformations between the carcass plies and belt layers is obtained.

In greater detail, in a first aspect, the invention relates to a process for producing tyres, according to claim 1.

It is the Applicant's opinion that the green tyre thus built is adapted to be submitted to a conventional curing treatment within a mould. During closure of the mould on the tyre, the blocks provided on the tread band will be fitted into the corresponding depressions or recesses provided in the vulcanisation mould for final geometric definition of the tread pattern. Closure of the mould can therefore take place without inducing important stresses on the raw elastomeric material forming the tread band and the underlying belt and carcass structures, thus preserving the structural integrity and homogeneity of the finished tyre.

In accordance with a second aspect, the invention relates to a plant for producing tyres, according to claim 13.

In accordance with a third aspect, the invention relates to a green tyre for vehicle wheels according to claim 21.

Preferred embodiments of the invention are defined in the dependent claims.

The present invention, in at least one of the aforesaid aspects, can have one or more of the preferred features hereinafter described.

The underlayer is applied around the bearing structure before application of the blocks onto the underlayer. Thus it is possible to form the tread band directly on the bearing structure of the tyre, comprising a belt package and/or a carcass.

The underlayer can be made by extrusion of at least one continuous elongated element of raw elastomeric material and circumferential winding of said continuous elongated element into a plurality of coils disposed mutually in side by side relationship around the bearing structure.

The underlayer can also be made by extrusion of at least one continuous strip of elastomeric material of cross-section substantially corresponding to the cross-section of the underlayer, and separation of a strip segment of predetermined length from said continuous strip.

In a further example, the underlayer is applied around the bearing structure after application of the blocks to the underlayer. Thus the cycle time can be optimised by manufacturing the tread band in a work location distinct from that where assembly of other tyre parts is carried out.

A first and a second end portions of the underlayer can be mutually joined end-to-end following winding of the underlayer around the bearing structure.

Separation of the strip segment is preferably carried out following a cutting line extending along a groove or hollow part defined in the pattern between circumferentially contiguous blocks. Thus accomplishment of the end-to-end splicing is facilitated.

At least one of the blocks can be also provided to protrude from the second end portion of the underlayer for application against the first end portion of the underlayer at the end of winding of the underlayer around the bearing structure.

During application of the blocks to the underlayer, the elastomeric material forming the blocks preferably has a temperature higher than 50°C.

During application of the blocks to the underlayer, the elastomeric material forming the underlayer preferably has a temperature higher than 50°C.

A sufficiently high temperature of the blocks and/or the underlayer during application facilitates efficient adhesion of the blocks to the underlayer.

To promote maintenance of a desired temperature after manufacture of the underlayer, heat can be supplied to the underlayer itself, before application of the blocks.

Heat to the blocks before applying them to the underlayer can also be supplied.

At least one of said blocks is preferably made by extrusion of a continuous bar of raw elastomeric material and separation of a bar segment of predetermined length from said continuous bar.

The blocks can be thus made in a simple and cheap manner, the productivity of which can be easily modulated depending on requirements.

It may be also provided that at least one of said blocks be shaped by plastic deformation before being applied to the underlayer.

At least one of said blocks is preferably applied to the underlayer by compressing an attachment surface of the block against an outer surface of the underlayer.

The blocks can be advantageously applied to the underlayer in a top region of the tyre, supported according to a horizontal geometric rotation axis. Thus application of the blocks is facilitated and the risk of separation of same under gravity is eliminated.

During closure of the mould a centripetal approaching of sectors carrying said forming recesses is preferably carried out.

The elastomeric material utilised in making the underlayer can have a different composition from that of the elastomeric material used in making the blocks.

Said underlayer-forming location may comprise an elongated-element dispensing assembly to supply at least one continuous elongated element of raw elastomeric material, and devices for circumferentially winding said continuous elongated element around the bearing structure of the tyre, in the form of a plurality of coils in mutual side by side relationship.

According to a possible variant, the underlayer-forming location comprises a strip-dispensing assembly for dispensing at least one continuous strip of elastomeric material having cross-section substantially corresponding to the underlayer cross-section, and cutting devices for cutting to size a strip segment of predetermined length from said continuous strip.

Heating devices may be provided for supplying heat to the underlayer before application of the blocks.

Also heating devices for supplying heat to the blocks before applying them to the underlayer may be provided.

Said heating devices preferably operate in the vicinity of the block-applying location.

The block-forming location may comprise a bar-dispensing assembly for supplying a continuous bar of raw elastomeric material and devices for cutting bar segments of predetermined length from said continuous bar.

The block-forming location may further comprise moulding members operating downstream of said cutting devices and upstream of the block-applying location for shaping the blocks by plastic deformation.

The block-applying location may comprise a rest surface for the underlayer and a handling device for laying the blocks onto the underlayer supported by the rest surface.

This handling device will be provided for laying at least one of said blocks protruding from a second end portion of the underlayer.

According to a further example, the block-applying location may comprise a handling device for laying the blocks on the underlayer applied around the bearing structure of the tyre.

Said handling device preferably comprises a gripper having jaws movable between an open condition in which they are mutually spaced apart and a closed condition in which they are mutually approached so as to define a concave seat the shape of which matches that of one of said blocks.

The handling device may comprise a presser member to compress the blocks against an outer surface of the underlayer.

Said reference indices comprise a fixed reference that can be made coincident with at least one reference index carried by the tyre and is indicative of the angular position of the blocks around a geometric rotation axis of the tyre itself.

Preferably, the forming recesses are defined in respective sectors that can be centripetally moved close to each other concurrently with closure of the mould.

In the obtained tyre, the underlayer can have a substantially constant cross-section profile along a longitudinal extension thereof.

The underlayer may comprise at least one continuous elongated element of raw elastomeric material extending circumferentially into a plurality of coils disposed in mutual side by side relationship around the bearing structure.

In a further embodiment, the underlayer comprises at least one strip segment of elastomeric material of cross-section substantially corresponding to the cross-section of the underlayer.

The strip segment preferably has a first end portion and a second end portion mutually joined end-to-end. Said end portions have a line of mutual connection extending along a hollow part defined in the tread pattern between circumferentially contiguous blocks.

At least one of said blocks can protrude from the second end portion of the underlayer and be applied against the first end portion of the underlayer.

At least one of said blocks preferably comprises a bar segment separated from a continuous bar of extruded elastomeric material.

The underlayer can be made of an elastomeric material different from that forming the blocks.

Further features and advantages will become more apparent from the detailed description of a preferred but not exclusive embodiment of a process and an apparatus for manufacturing tyres, in accordance with the present invention.

This description will be set out hereinafter with reference to the accompanying drawings, given by way of non-limiting example, in which:
- Fig. 1 is a diagrammatic view from above of a plant for manufacturing tyres in accordance with the present invention;
- Fig. 2 shows an enlarged detail of Fig. 1 while a different process operation is being carried out;
- Fig. 3 is an enlarged cross-section of a detail of a gripper associated with a handling device provided in the plant in Fig. 1;
- Fig. 4 shows manufacture of a tread band according to a possible variant of the invention;

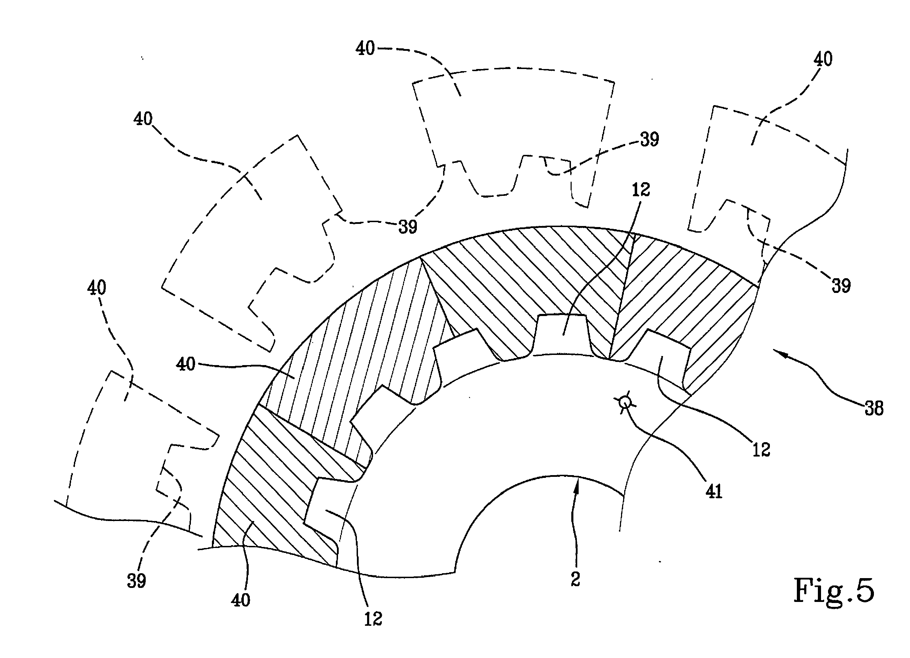

- Fig. 5 is a diagrammatic and fragmentary view from above showing introduction of the tyre into a curing mould;
- Fig. 6 shows a cross-section of a tyre made in accordance with the invention.

With reference to the drawings, a plant for producing tyres for vehicle wheels provided for carrying out a process according to the present invention has been generally identified with reference numeral 1.

Plant 1 is intended for manufacturing tyres 2, in particular of the type usually employed in building yards for example, mounted on excavators, cranes and the like, intended for also operating on grounds of weak consistency such as earth, mud and the like. These tyres usually have important sizes with an outer diameter included, just as an indication, between about 800 mm and about 2200 mm, and a weight included between about 30 kg and about 500 kg, for example.

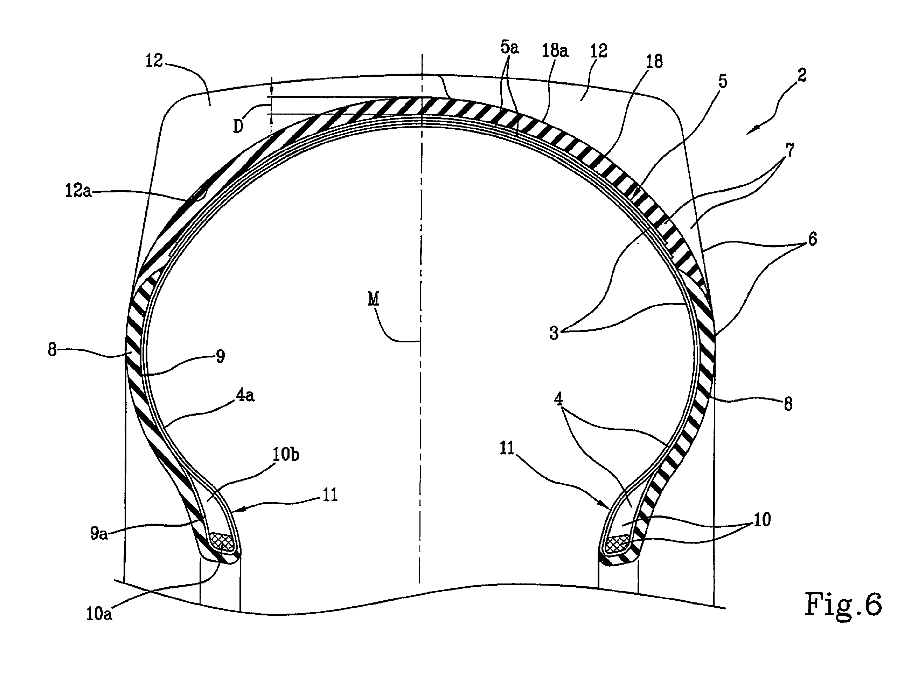

As shown in Fig. 6, the tyre essentially comprises at least one bearing structure 3 in which a so-called carcass 4 and a belt package 5 can be identified, as well as an outer coating 6 in which a tread band 6 and a pair of sidewalls 8 can be seen.

Carcass 4 normally comprises one or more radially superposed carcass plies 9, each of them including textile or metallic cords disposed parallel to each other and oriented substantially perpendicular to a circumferential extension direction of the tyre, or following an oblique and preferably crossed orientation relative to possible adjacent carcass plies 9. Two annular anchoring structures 10, each comprising a so-called bead core 10a preferably carrying an elastomeric filler 10b at a radially external position, are in engagement with respective end flaps 9a of the carcass ply or plies 9. The annular anchoring structures 10 are integrated in the vicinity of regions usually identified as "beads" 11, at which normally engagement between tyre 2 and a respective mounting rim (not shown) occurs, according to a fitting diameter determined by the inner diametrical sizes of the annular anchoring structures 10. Carcass 4 can be possibly internally coated with a layer of airtight elastomeric material, a so-called "liner" 4a.

The belt package 5 usually comprises one or more belt layers 5a circumferentially applied around carcass 4 at an axially centred position relative to an axial symmetry plane "M" perpendicular to the rotation axis of the tyre, each of them comprising textile or metallic cords disposed in oblique orientation relative to the circumferential extension direction and in crossed orientation relative to the adjacent belt layer or layers 5a.

The tread band 7 is circumferentially superposed on the belt package 5 and externally has a plurality of blocks 12 alternated with grooves or hollow parts 13 suitably shaped and distributed so as to define a so-called tread pattern.

In tyres designed to also operate on uneven grounds and/or grounds of weak consistency such as earth, mud and the like, the tread pattern can advantageously have blocks 12 in the form of elongated ribs with a course transverse or oblique to the circumferential extension direction, distributed in one or more axially-approached circumferential rows. The blocks 12 belonging to the same circumferential row are preferably alternated with hollow parts or grooves 13 of big sizes, also having an approximately elongated conformation, with a width "L" that, measured perpendicularly of the longitudinal extension of two adjacent blocks 12, can be equal to or higher than the width "W" measured on the blocks 12 so as to define a so-called solid/hollow ratio included, just as an indication, between about 0.05 and about 0.9, more preferably between about 0.4 and about 0.85.

To the aims of the present specification by "solid/hollow ratio" it is intended a parameter characteristic of the tread pattern indicating the ratio between the overall surface of the grooves or hollow parts of a given portion of the tyre tread pattern (possibly the whole tread pattern) and the overall surface of the given portion of the tread pattern (possibly the whole tread pattern).

The sidewalls 8 are applied to carcass 4 at laterally opposite positions, each extending from the corresponding bead 11 to a corresponding side edge of the tread band 7.

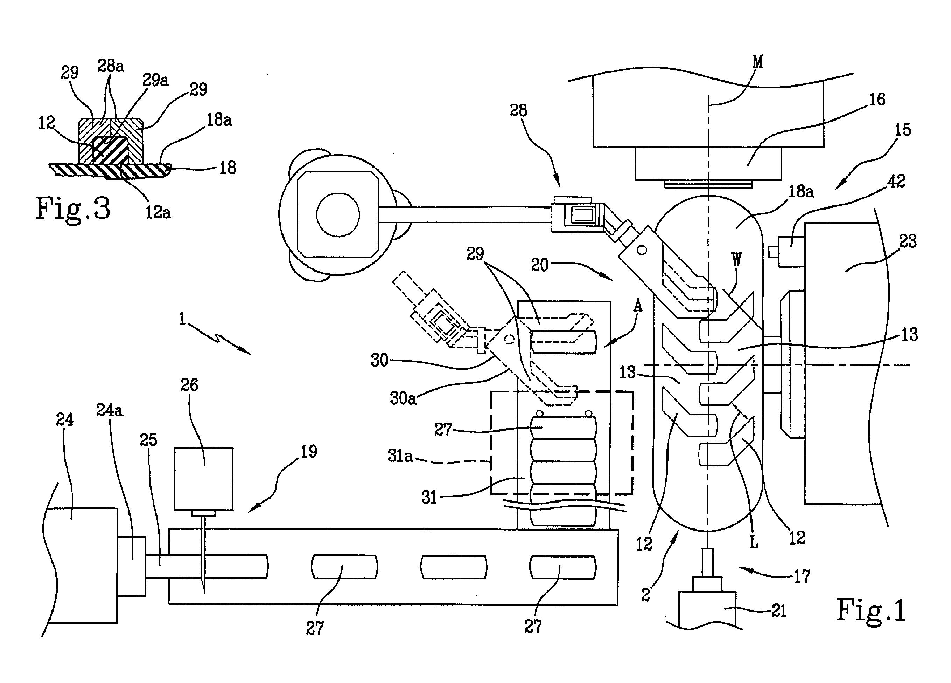

As diagrammatically shown by way of example in Fig. 1, plant 1 comprises devices for manufacturing the bearing structure 3, which devices can for example comprise a first building station, not shown as it can be made in a manner known by itself, at which carcass 4 is made. In the first building station, carcass 4 made in the form of a cylindrical sleeve for example, can be also submitted to application of sidewalls 8.

By possible transfer onto an assembling drum 14 provided in an assembling station 15, carcass 4 is shaped into a toroidal configuration, following axial mutual approaching of beads 11 concurrently with injection of air or other fluid under pressure inside the carcass ply/plies 9.

A dispensing unit 16 can operate in the second building station and it provides the belt layers 5a that, through rotation of the assembling drum 14, are circumferentially wound at a radially external position on carcass 4 having a toroidal conformation, so as to form the belt package 5.

Plant 1 further comprises devices for forming the tread band 7 that can be circumferentially applied around a bearing structure 3 in order to define the green tyre 2, to be submitted to curing.

These devices comprise an underlayer-forming location 17, in which an underlayer 18 of raw elastomeric material is made, said underlayer being part of the tread band 7. Underlayer 18 can have a substantially constant cross-section profile along a longitudinal extension thereof and a thickness "S" included, just as an indication, between about 75% and about 150%, and more preferably included between about 90% and about 110% of the distance "D" to be measured, in said axial symmetry plane "M" of the finished tyre, between a radially external surface of the belt package 5 and a bottom surface of the grooves 13 defined between circumferentially contiguous blocks 12 in the tyre itself.

Also provided is a block-forming location 19, at which blocks 12 of raw elastomeric material are made. A block-applying location 20 carries out application of blocks 12 mutually spaced apart according to the desired tread pattern, onto the underlayer 18.

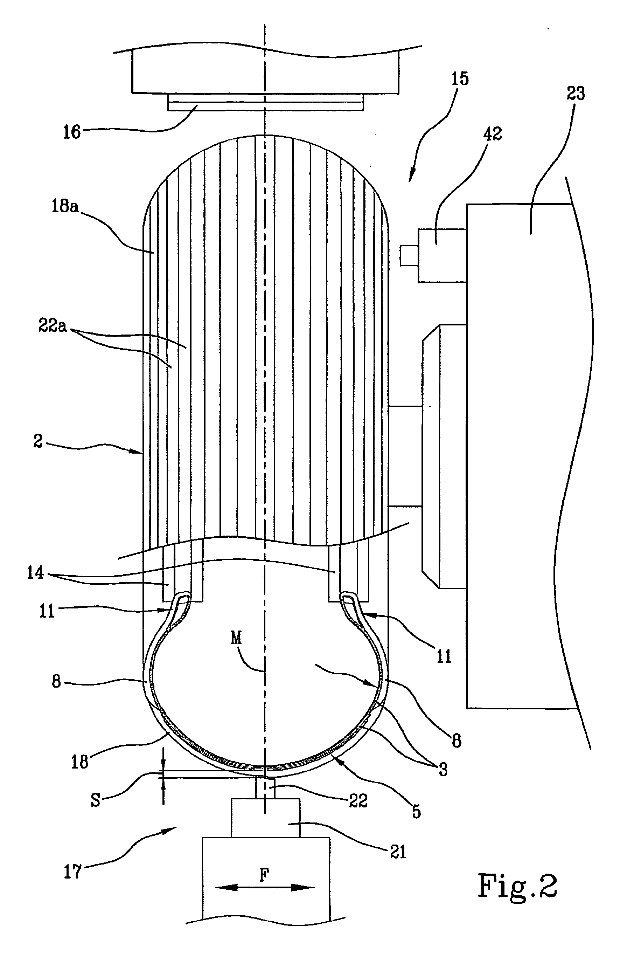

In accordance with a first example of the invention shown in Figs. 1 and 2, the underlayer-forming location 17 comprises an elongated-element dispensing assembly 21, a first extruder for example, designed to supply at least one continuous elongated element 22 of raw elastomeric material and devices for winding said continuous elongated element 22 circumferentially around the bearing structure 3 of tyre 2. In greater detail, the bearing structure 3 of tyre 2 under process can be supported by a drum in turn supported by an actuating assembly 23, by which the drum itself is driven in rotation in front of the elongated-element dispensing assembly 21.

In the example shown, said drum consists is the assembling drum 14 itself, provided in the assembling station 15 of which the actuating assembly 23 is an integral part.

Through axial-distribution movements imparted to the elongated-element dispensing assembly 21 (see arrow F in Fig. 2) and/or to drum 14, the continuous elongated element 22 is wound around the bearing structure 3 into circumferential coils 22a in mutual side by side and/or superposed relationship, so as to make the underlayer 18 according to desired features in terms of thickness "S" and cross-section profile, before carrying out application of the blocks 12 to the underlayer itself.

The block-forming location 19 designed to make blocks 12 can comprise a bar-dispensing assembly 24, a second extruder for example, supplying a continuous bar 25 of raw elastomeric material, having a cylindrical section of a width approximately corresponding to that of blocks 12 to be applied to the underlayer 18. Combined with the bar-dispensing assembly 24 are cutting devices 26 separating bar segments 27 of predetermined length from the continuous bar 25. These cutting devices 26 can for example comprise a blade set in reciprocating motion at an outlet die 24a of the extruder dispensing said continuous bar 25.

Each bar segment 27 is designed to form one of blocks 12 to be applied to the underlayer 18 at the block-applying location 20 that to this aim can comprise at least one handling device 28 for laying blocks 12 on the underlayer 18 applied around the bearing structure 3 of tyre 2.

The handling device 28 preferably comprises an anthropomorphic robotized arm carrying a gripper 28a having jaws 29 movable between an open condition at which they are mutually spaced and a closed condition at which they are close to each other, for defining a concave seat 29a the shape of which matches that of one of said blocks 12.

Moulding members operating downstream of the cutting devices 26 and upstream of the block-applying location 20 can be provided for shaping by plastic deformation, the bar segments 27 obtained from the continuous bar 25, so as to give the blocks 12 a desired conformation. For instance, these moulding members can comprise the same gripper 28a being part of the handling device 28 installed in the applying location, the concave seat 29a of which will be suitably shaped for impressing each block 12 with a desired conformation in cross-section and/or in the longitudinal extension.

The handling device 28 can also comprise a presser member 30 to compress blocks 12 against an outer surface 18a of the underlayer 18.

In the example shown, this presser member 30 too consists of the same gripper 28a being part of the handling device 28, which gripper is provided, if necessary, of at least one counter-surface 30a, designed to act in thrust relationship against the block 12 applied to an underlayer 18. If required, by appropriate movements of gripper 28a carried out by the handling device 28, the action of the counter-surface 30a ensures efficient application of block 12, even when the outer surface 18a of the underlayer 18 has a profile showing a marked transverse curvature.

In operation, the bar segments 27 sequentially produced upon the action of the cutting devices 26 are preferably laid on a storage unit 31, represented by a roller chute for example, designed to receive the individual bar segments 27 produced by the cutting devices 26 to bring them one by one to a predetermined grip region "A" by means of the handling device 28. The storage unit 31 makes it possible to uncouple operation of the bar-dispensing assembly 24 that can operate in a continuous manner, from operation of the block-applying location 20 that, in the example shown, is discontinuous because application of blocks 12 only begins at the end of application of the belt layers 5a and the underlayer 18.

The storage unit 31 can advantageously have a storage capacity preferably included between about 80% and about 120% of the amount of blocks 12 to be used for manufacture of one tread band 7. This amount of stored blocks 12 is of such a nature that it does not involve too long waiting times between manufacture and true application of each block 12, so as to ensure that at the moment of application the elastomeric material of each block 12 still has a sufficiently high temperature for promoting steady coupling of said block with the underlayer 18.

In case of need, heating devices 31a comprising infrared lamps for example, can be provided for operating on the blocks 12 reaching the block-applying location 20 and/or on the underlayer 18 applied on tyre 2 under process, to enable the temperature of the elastomeric material constituting blocks 12 and/or underlayer 18 to have a value, during application, preferably included between about 50°C and about 130°C, and more preferably included between about 60°C and about 100°C.

For purposes of application, the handling device 28 brings gripper 28a close to the storage unit 31 to pick up a block 12 from the grip region "A". Gripper 28a, provided in the open condition, is actuated to move jaws 29 close to each other to the closed condition, thus determining engagement of block 12 and possible moulding of same by plastic deformation into the desired configuration.

The handling device 28 brings block 12 against the outer surface 18a of underlayer 18, preferably at a top region of tyre 2, supported according to a horizontal geometric rotation axis "X". Thus the risk that block 12 may separate from underlayer 18 and fall under gravity is eliminated when gripper 28a is brought again to the open condition for leaving block 12 on the tyre 2 under process.

By possible rotation of gripper 28a, the counter-surface 30a can be brought into thrust relationship against block 12 released on the tyre 2 under process, so that the block is compressed at an attachment surface 12a thereof against the outer surface 18a of underlayer 18, to promote steady mutual adhesion.

An angular rotation of the assembling drum 14 by a step equal to the predetermined distribution step of blocks 12 makes the tyre itself ready for application of a new block 12 disposed circumferentially in side by side relationship with the previously applied block 12.

The above described operating cycle of the block-applying location 20 is repeated until application of blocks 12 around the tyre 2 under process is completed, in one or more axially approached circumferential rows.

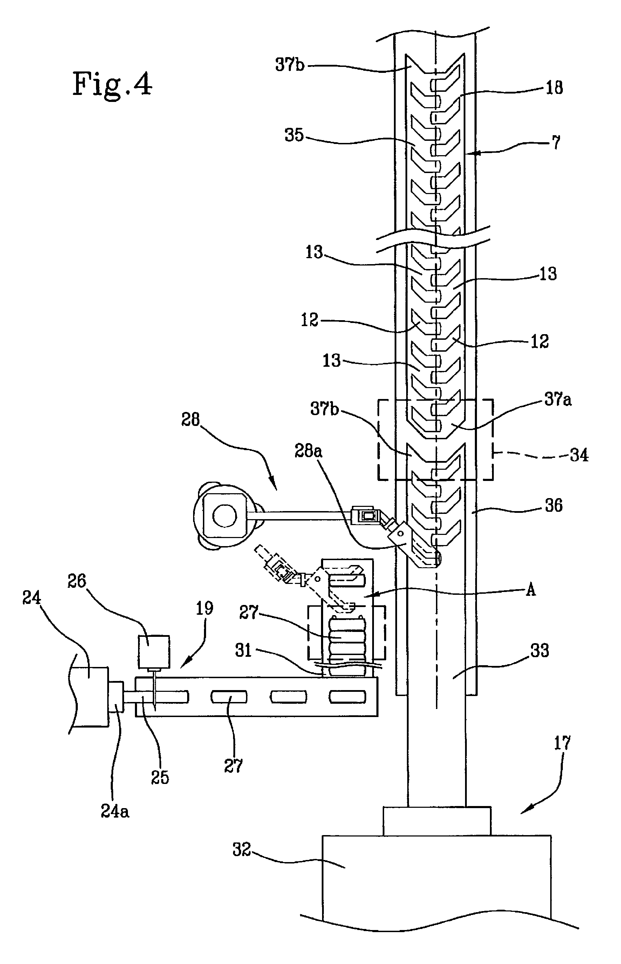

In Fig. 4 manufacture of the tread band 7 in accordance with a further example of the invention is diagrammatically shown.

According to this further example, the underlayer-forming location comprises a strip-dispensing assembly 32 designed to supply at least one continuous strip 33 of elastomeric material, the cross-section of which substantially corresponds, at least in terms of cross-section sizes, to the cross-section of underlayer 18.

Associated with the strip-dispensing assembly 32, comprising a second extruder for example, are measure-cutting devices 34 (only diagrammatically shown) designed to separate a strip segment 35 of predetermined length from the continuous strip 33, said length being preferably the same as the circumferential extension of the underlayer 18 to be applied to tyre 2 under process.

This strip segment 35 can constitute by itself the underlayer 18 to be applied to tyre 2 under process, once application of blocks 12 to the underlayer itself has been completed. To this aim, underlayer 18 can be disposed on a preferably flat rest surface 36 to be submitted to the action of the handling device 28 applying blocks 12 in the same manner as described with reference to the example shown in Fig. 1.

When application of blocks 12 has been completed, the tread band 7 thus obtained can be applied around the bearing structure 3 of tyre 2 under process. In particular, application of the tread band 7 contemplates that a first end portion 37a of the underlayer 18 is caused to adhere to the bearing structure 3 of tyre 2, the tread band 7 being subsequently circumferentially wound around the whole circumferential extension of tyre 2 until making a second end portion 37b match the previously applied first end portion 37a. The end portions 37a, 37b of underlayer 18 are thus mutually joined end-to-end at the end of application of the tread band 7 to tyre 2.

To facilitate this splicing operation, separation of the strip segment 35 from the remaining continuous strip 33 can be carried out following a cutting line extending along one of grooves 13 defined in the tread pattern, between circumferentially contiguous blocks 12, preferably according to a course parallel to the blocks 12 themselves.

Alternatively, the separation can be carried out for example following a cutting line perpendicular to the longitudinal extension of the underlayer 18. In this case, the handling device 28 can be designed to lay one or more of blocks 12 in such a manner that they partly protrude from the second end portion 37b of the underlayer 18. The protruding portions of blocks 12 will overlap the first end portion 37a of the underlayer 18 already applied to tyre 2 under process, at the end of the tread-band applying step 7 around the circumferential extension of the tyre under process. The built tyre 2 lends itself to be removed from the assembling station 15 for being submitted to a final curing and moulding treatment. To this end, tyre 2 is submitted to the action of curing devices comprising a mould 38 having forming recesses 39 the conformation of which corresponds to that of the respective blocks 12 to be obtained in the finished tyre 2. Preferably, these forming recesses 39 are defined in respective circumferential sectors 40 of mould 38, that can be centripetally moved close to each other towards a geometric reference axis coincident with the geometric rotation axis "X" of tyre 2, concurrently with closure of the mould 38. The green tyre 2 is introduced into mould 38 provided in an open condition, sectors 30 being radially moved apart relative to the geometric reference axis.

Before closing mould 38, the blocks 12 previously applied to the tread band 7 are aligned in a radial direction relative to the corresponding forming recesses 39. Consequently each block 12 is introduced into, and remains in engagement in the respective forming recess 39 when, following closure of mould 38, sectors 40 move radially close to the geometric reference axis for compressing and moulding the tread band 7.

Alignment of blocks 12 with the respective forming recesses 39 can be advantageously facilitated by fitting of at least one reference index 41 carried by tyre 2, indicative of the angular position of blocks 12 around the geometric axis of the tyre 2 itself. This reference index 41 can consist for example of one of the corners of a block 12 or any other point that can be uniquely identified along the circumferential extension of the tread band 7.

In accordance with a preferred solution, the reference index 41 is however provided to be associated with tyre 2 before carrying out the curing treatment, for instance by means of a mark made by a stamping apparatus 42 associated with the assembling station 15 or other devices operating upstream of mould 38.

The mark or other reference index 41 is adapted to be easily identified during introduction of tyre 2 into mould 38, to make it correspond with at least one fixed reference (not shown) provided in the mould 38 itself. This fixed reference can for example consist of a corresponding mark exhibited by mould 38, or integrated into an optical detection unit associated with the mould itself and interfaced with an automatic device for loading tyre 2 into the mould 38.

Closure of mould 38 around tyre 2 already provided with blocks 12 in alignment with the respective forming recesses 39 can easily take place without submitting tyre 2 to the important stresses required in the known art for forming the blocks 12 into the thickness "S" of the tread band 7.

At all events the conformation of the forming recesses 39 can be of such a nature as to enable the conformation of blocks 12 and/or underlayer 18 of the tread band 7 to be trimmed or to receive a greater definition. The transmitted stresses for obtaining this deformation would be in any case of negligible amount if compared with the amount of stresses imposed in the known art.

Accomplishment of blocks 12 separately from underlayer 18 also enables use, if necessary, of elastomeric materials of different compositions for manufacture of blocks 12 and underlayer 18, respectively. For instance, blocks 12 can be made using a softer compound than that of underlayer 18. Underlayer 18 in turn can be made using a compound having better hysteresis properties than those of block 12.

## Claims

1. A process for producing tyres, in which a tread band (7) of raw elastomeric material is circumferentially applied around a bearing structure (3) incorporating reinforcing cords, so as to form a green tyre (2) subsequently submitted to a curing treatment;
wherein the tread band (7) is formed by:
- making an underlayer (18) of raw elastomeric material;
- making blocks (12) of raw elastomeric material;
- applying the blocks (12) mutually spaced apart according to a predetermined tread pattern, onto the underlayer (18),
wherein said curing treatment comprises:
- introducing the tyre (2) into a mould (38) having forming recesses (39) corresponding to respective blocks (12) of the tyre (2); and
- aligning the blocks (12) with the respective forming recesses (39) before closing the mould (38), so that each block (12) is engaged in the respective forming recess (39), in consequence of closure of the mould (38),
**characterized in that** before the curing treatment, at least one reference index (41) indicative of the angular position of the blocks (12) around a geometric rotation axis (X) of the tyre (2) is associated with the tyre itself,
wherein alignment of the blocks (12) with the respective forming recesses (39) is carried out by making said at least one reference index (41) carried by the tyre (2) coincide with a fixed reference.

2. A process as claimed in claim 1, wherein the underlayer (18) is applied around the bearing structure (3) before application of the blocks onto the underlayer (18).

3. A process as claimed in claim 1 or 2, wherein the underlayer (18) is made by extrusion of at least one continuous elongated element (22) of raw elastomeric material and circumferential winding of said continuous elongated element (22) into a plurality of coils (22a) disposed mutually in side by side relationship around the bearing structure (3).

4. A process as claimed in claim 1, wherein the underlayer (18) is made by extrusion of at least one continuous strip (33) of elastomeric material of cross-section substantially corresponding to the cross-section of the underlayer (18), and separation of a strip segment (35) of predetermined length from said continuous strip (33).

5. A process as claimed in claim 1, wherein the underlayer (18) is applied around the bearing structure (3) after application of the blocks (12) onto the underlayer (18).

6. A process as claimed in claim 4, wherein separation of the strip segment (35) is carried out following a cutting line extending along a groove or hollow parts defined in the tread pattern between circumferentially contiguous blocks.

7. A process as claimed in claim 4 or 5, wherein a first and a second end portions (37a, 37b) of the underlayer (18) are mutually joined end-to-end following winding of the underlayer (18) around the bearing structure (3), wherein at least one of said blocks (12) protrudes from the second end portion (37b) of the underlayer (18) and is applied against the first end portion (37a) of the underlayer (18) at the end of winding of the underlayer (18) around the bearing structure (3).

8. A process as claimed in claim 1, wherein after manufacture of the underlayer (18), heat is supplied to the underlayer (18) and/or to the blocks, before application of the blocks (12) to the underlayer (18).

9. A process as claimed in claim 1, wherein at least one of said blocks (12) is made by extrusion of a continuous bar (25) of raw elastomeric material and separation of a bar segment (27) of predetermined length from said continuous bar (25).

10. A process as claimed in claim 1, wherein at least one of said blocks (12) is shaped by plastic deformation before being applied to the underlayer (18).

11. A process as claimed in claim 1, wherein said blocks (12) are applied to the underlayer (18) at a top region of the tyre (2), supported according to a horizontal geometric rotation axis (X).

12. A process as claimed in claim 1, wherein the elastomeric material utilised in making the underlayer (18) has different composition from that of the elastomeric material used in making the blocks (12).

13. A plant for producing tyres, comprising:
- devices for making a bearing structure (3) incorporating reinforcing cords;
- devices for forming a tread band (7);
- devices for curing a tyre (2) including said tread band (7) circumferentially applied around the bearing structure (3);
wherein the devices for forming the tread band (7) comprise:
- an underlayer-forming location (17) to make an underlayer (18) of raw elastomeric material;
- a block-forming location (19) to make blocks (12) of raw elastomeric material;
- a block-applying location (20) to apply the blocks (12) onto the underlayer (18), mutually spaced apart according to a predetermined tread pattern,
wherein said devices for curing the tyre (2) comprise:
- a mould (38) having forming recesses (39) corresponding to respective blocks (12) of the tyre (2), **characterized in that** it further comprises:
- devices for associating with the tyre (2) at least one reference index (41) indicative of the angular position of the blocks (12) around a geometric axis of the tyre, operatively disposed upstream of the devices for curing the tyre (2),
said devices for curing the tyre (2) further comprising:
- reference indices for aligning the blocks (12) with the respective forming recesses (39) before closing the mould (38), so that each block (12) is engaged in the respective forming recess (39) as a consequence of closure of the mould (38).

14. A plant as claimed in claim 13, wherein the block-forming location (19) comprises a bar-dispensing assembly (24) for supplying a continuous bar (25) of raw elastomeric material and cutting devices (26) for cutting bar segments (27) of predetermined length from said continuous bar (25)

15. A plant as claimed in claim 13, wherein the block-applying location (20) comprises a rest surface (36) for the underlayer (18) and a handling device (28) for laying the blocks (12) on the underlayer (18) supported by the rest surface (36).

16. A plant as claimed in claim 13, wherein the block-applying location (20) comprises a handling device (28) for laying the blocks (12) on the underlayer (18) applied around the bearing structure (3) of the tyre (2).

17. A plant as claimed in claim 15 or 16, wherein said handling device (28) comprises a gripper (28a) having jaws (29) movable between an open condition in which they are mutually spaced apart and a closed condition in which they are mutually approached so as to define a concave seat (29a) the shape of which matches that of one of said blocks (12).

18. A plant as claimed in claim 15 or 16, wherein said handling device (28) comprises a presser member (30) to compress the blocks (12) against an outer surface (18a) of the underlayer (18).

19. A plant as claimed in claim 13, wherein said reference indices comprise a fixed reference that can be made coincident with at least one reference index (41) carried by the tyre (2) and indicative of the angular position of the blocks (12) around a geometric rotation axis (X) of the tyre itself.

20. A plant as claimed in claim 13, wherein said forming recesses (39) are defined in respective sectors (40) that can be centripetally moved close to each other concurrently with closure of the mould (38).

21. A green tyre for vehicle wheels comprising a tread band (7) of elastomeric material circumferentially disposed around a bearing structure (3) incorporating reinforcing cords,
wherein the tread band (7) comprises:
- an underlayer (18) circumferentially extending around the bearing structure (3);
- a plurality of blocks (12) mutually spaced apart according to a predetermined tread pattern and each having an attachment surface (12a) applied against an outer surface (18a) of the underlayer (18), **characterized in that** it further comprises at least one reference index (41) indicative of the angular position of the blocks (12) around a geometric rotation axis (X) of the tyre (2).

22. A tyre as claimed in claim 21, wherein the underlayer (18) comprises at least one continuous elongated element (22) of raw elastomeric material circumferentially extending into a plurality of coils (22a) disposed in mutual side by side relationship around the bearing structure (3).

23. A tyre as claimed in claim 21, wherein the underlayer (18) comprises at least one strip segment (35) of elastomeric material of cross-section substantially corresponding to the cross-section of the underlayer (18), wherein said strip segment (35) has a first end portion (37a) and a second end portion (37b) mutually joined end-to-end, wherein said end portions (37a, 37b) have a line of mutual connection extending along a hollow part (13) defined in the tread pattern between circumferentially contiguous blocks (12).

24. A tyre as claimed in claim 21, wherein the underlayer (18) comprises at least one strip segment (35) of elastomeric material of cross-section substantially corresponding to the cross-section of the underlayer (18), wherein said strip segment (35) has a first end portion (37a) and a second end portion (37b) mutually joined end-to-end, wherein at least one of said blocks (12) protrudes from the second end portion (37b) of the underlayer (18) and is applied against the first end portion (37a) of the underlayer (18).

25. A tyre as claimed in claim 21, wherein the underlayer (18) is made of an elastomeric material different from that of which the blocks (12) are made.

## Patentansprüche

1. Verfahren zur Herstellung von Reifen, bei welchem ein Laufflächenring (7) aus Elastomerrohmaterial in Umfangsrichtung um eine Trägerstruktur (3), die Verstärkungsdrähte integriert, herum angelegt wird, um einen Rohreifen (2) zu bilden, der in der Folge einer Vulkanisierungsbehandlung unterzogen wird;
wobei der Laufflächenring (7) gebildet wird durch:
- Herstellen einer Unterlage (18) aus Elastomerrohmaterial;
- Herstellen von Blöcken (12) aus Elastomerrohmaterial;
- Aufbringen der Blöcke (12) auf die Unterlage (18), in einem Abstand voneinander in Überstimmung mit einem vorbestimmten Laufflächenprofil,
wobei die Vulkanisierungsbehandlung umfasst:
- Einsetzen des Reifens (2) in eine Form (38) mit Formungsausnehmungen (39), die den jeweiligen Blöcken (12) des Reifens (2) entsprechen; und
- Ausrichten der Blöcke (12) mit den jeweiligen Formungsausnehmungen (39) vor dem Schließen der Form (38), so dass jeder Block (12) als Folge des Schließens der Form (38) mit der jeweiligen Formungsausnehmung (39) in Eingriff steht,
**dadurch gekennzeichnet, dass** vor der
Vulkanisierungsbehandlung zumindest ein Referenzindex (41), der die Winkelstellung der Blöcke (12) um eine geometrische Drehachse (X) des Reifens (2) herum angibt, dem Reifen selbst zugeordnet wird,
wobei die Ausrichtung der Blöcke (12) mit den jeweiligen Formungsausnehmungen (39) durchgeführt wird, indem der zumindest eine, von dem Reifen (2) getragene Referenzindex (41) mit einer festgelegten Referenz in Übereinstimmung gebracht wird.

2. Verfahren nach Anspruch 1, wobei die Unterlage (18) vor dem Aufbringen der Blöcke auf die Unterlage (18) um die Trägerstruktur (3) herum angelegt wird.

3. Verfahren nach Anspruch 1 oder 2, wobei die Unterlage (18) durch Extrusion zumindest eines durchgehenden länglichen Elements (22) aus Elastomerrohmaterial und Aufwickeln des durchgehenden länglichen Elements (22) in Umfangsrichtung zu einer Vielzahl von Spulen (22a) hergestellt wird, die in ihrer Beziehung Seite an Seite um die Trägerstruktur (3) herum angeordnet sind.

4. Verfahren nach Anspruch 1, wobei die Unterlage (18) durch Extrusion zumindest eines durchgehenden Streifens (33) aus Elastomermaterial mit einem Querschnitt, der im Wesentlichen dem Querschnitt der Unterlage (18) entspricht, und Trennung eines Streifensegments (35) mit einer vorbestimmten Länge von dem durchgehenden Streifen (33) hergestellt wird.

5. Verfahren nach Anspruch 1, wobei die Unterlage (18) nach dem Aufbringen der Blöcke (12) auf die Unterlage (18) um die Trägerstruktur (3) herum angelegt wird.

6. Verfahren nach Anspruch 4, wobei die Trennung des Streifensegments (35) entlang einer Schnittlinie erfolgt, die sich entlang einer Nut oder entlang von hohlen Abschnitten erstreckt, die in dem Laufflächenprofil zwischen in Umfangsrichtung benachbarten Blöcken definiert sind.

7. Verfahren nach Anspruch 4 oder 5, wobei ein erster und ein zweiter Endabschnitt (37a, 37b) der Unterlage (18) auf das Wickeln der Unterlage (18) um die Trägerstruktur (3) folgend an ihren Enden miteinander zusammengefügt werden, wobei zumindest einer der Blöcke (12) von dem zweiten Endabschnitt (37b) der Unterlage (18) hervorsteht und nach Abschluss des Wickelns der Unterlage (18) um die Trägerstruktur (3) gegen den ersten Endabschnitt (37a) der Unterlage (18) angelegt wird.

8. Verfahren nach Anspruch 1, wobei nach der Herstellung der Unterlage (18) Wärme an die Unterlage (18) und/oder an die Blöcke zugeführt wird, bevor die Blöcke (12) auf die Unterlage (18) aufgebracht werden.

9. Verfahren nach Anspruch 1, wobei zumindest einer der Blöcke (12) durch Extrusion eines durchgehenden Stabs (25) aus Elastomerrohmaterial und Trennung eines Stabsegments (27) mit einer vorbestimmten Länge von dem durchgehenden Stab (25) hergestellt wird.

10. Verfahren nach Anspruch 1, wobei zumindest einer der Blöcke (12) durch plastisches Verformen geformt wird, bevor er auf die Unterlage (18) aufgebracht wird.

11. Verfahren nach Anspruch 1, wobei die Blöcke (12) an einem oberen Bereich des Reifens (2), getragen in Übereinstimmung mit einer horizontalen geometrischen Drehachse (X), auf die Unterlage (18) aufgebracht werden.

12. Verfahren nach Anspruch 1, wobei das Elastomermaterial, das zur Herstellung der Unterlage (18) eingesetzt wird, eine unterschiedliche Zusammensetzung aufweist als das Elastomermaterial, das zur Herstellung der Blöcke (12) verwendet wird.

13. Anlage zur Herstellung von Reifen, die Folgendes aufweist:
- Einrichtungen zur Herstellung einer Trägerstruktur (3), die Verstärkungsdrähte integriert;
- Einrichtungen zur Formung eines Laufflächenrings (7);
- Einrichtungen zum Vulkanisieren eines Reifens (2), der den Laufflächenring (7) in Umfangsrichtung um die Trägerstruktur (3) herum angelegt umfasst;
wobei die Einrichtungen zur Formung des Laufflächenrings (7) umfassen:
- eine Unterlagen-Formungsposition (17) zur Herstellung einer Unterlage (18) aus Elastomerrohmaterial;
- eine Block-Formungsposition (19) zur Herstellung von Blöcken (12) aus Elastomerrohmaterial;
- eine Block-Aufbringungsposition (20) zum Aufbringen der Blöcke (12) auf die Unterlage (18) in einem Abstand voneinander in Überstimmung mit einem vorbestimmten Laufflächenprofil,
wobei die Einrichtungen zum Vulkanisieren des Reifens (2) umfassen:
- eine Form (38) mit Formungsausnehmungen (39), die jeweiligen Blöcken (12) des Reifens (2) entsprechen,
**dadurch gekennzeichnet, dass** sie des Weiteren umfasst:
- Einrichtungen zum Zuordnen zumindest eines Referenzindex (41), der die Winkelstellung der Blöcke (12) um eine geometrische Achse des Reifens angibt, an den Reifen (2), wobei die Einrichtungen im Betrieb den Einrichtungen zum Vulkanisieren des Reifens (2) vorgeordnet sind,
wobei die Einrichtungen zum Vulkanisieren des Reifens (2) des Weiteren umfassen:
- Referenzindizes zum Ausrichten der Blöcke (12) mit den jeweiligen Formungsausnehmungen (39) vor dem Schließen der Form (38), so dass jeder Block (12) als Folge des Schließens der Form (38) mit der jeweiligen Formungsausnehmung (39) in Eingriff steht.

14. Anlage nach Anspruch 13, wobei die Block-Formungsposition (19) eine Stabausgabeanordnung (24) zum Zuführen eines durchgehenden Stabs (25) aus Elastomerrohmaterial sowie Schneideinrichtungen (26) zum Schneiden von Stabsegmenten (27) mit einer vorbestimmten Länge von dem durchgehenden Stab (25) umfasst.

15. Anlage nach Anspruch 13, wobei die Block-Aufbringungsposition (20) eine Auflagefläche (36) für die Unterlage (18) sowie eine Manipulationsvorrichtung (28) zum Auflegen der Blöcke (12) auf die von der Auflagefläche (36) getragene Unterlage (18) umfasst.

16. Anlage nach Anspruch 13, wobei die Block-Aufbringungsposition (20) eine Manipulationsvorrichtung (28) zum Auflegen der Blöcke (12) auf die um die Trägerstruktur (3) des Reifens (2) angelegte Unterlage (18) umfasst.

17. Anlage nach Anspruch 15 oder 16, wobei die Manipulationsvorrichtung (28) einen Greifer (28a) mit Backen (29) umfasst, die zwischen einem offenen Zustand, in dem sie voneinander beabstandet sind, und einem geschlossenen Zustand beweglich sind, in dem sie einander angenähert sind, um einen konkaven Sitz (29a) zu definieren, dessen Gestalt jener eines der Blöcke (12) entspricht.

18. Anlage nach Anspruch 15 oder 16, wobei die Manipulationsvorrichtung (28) ein Anpresselement (30) umfasst, um die Blöcke (12) gegen eine Außenfläche (18a) der Unterlage (18) zu pressen.

19. Anlage nach Anspruch 13, wobei die Referenzindizes eine festgelegte Referenz umfassen, die mit zumindest einem Referenzindex (41), der an dem Reifen (2) getragen wird und die Winkelstellung der Blöcke (12) um eine geometrische Drehachse (X) des Reifens selbst angibt, in Übereinstimmung gebracht werden kann.

20. Anlage nach Anspruch 13, wobei die Formungsausnehmungen (39) in jeweiligen Sektoren (40) definiert sind, die mit dem Schließen der Form (38) zentripetal nahe aneinander bewegt werden können.

21. Rohreifen für Fahrzeugräder umfassend einen Laufflächenring (7) aus Elastomermaterial, der in Umfangsrichtung um eine Trägerstruktur (3), die Verstärkungsdrähte integriert, herum angeordnet ist,
wobei der Laufflächenring (7) umfasst:
- eine Unterlage (18), die sich in Umfangsrichtung um die Trägerstruktur (3) herum erstreckt;
- eine Vielzahl von Blöcken (12), die in einem Abstand voneinander in Überstimmung mit einem vorbestimmten Laufflächenprofil angeordnet sind und jeweils eine Befestigungsfläche (12a) aufweisen, die gegen eine Außenfläche (18a) der Unterlage (18) angelegt ist,
**dadurch gekennzeichnet, dass** er des Weiteren zumindest einen Referenzindex (41) umfasst, der die Winkelstellung der Blöcke (12) um eine geometrische Drehachse (X) des Reifens (2) angibt.

22. Reifen nach Anspruch 21, wobei die Unterlage (22) zumindest ein durchgehendes längliches Element (22) aus Elastomerrohmaterial umfasst, das sich in Umfangsrichtung in eine Vielzahl von Spulen (22a) erstreckt, die in ihrer Beziehung Seite an Seite um die Trägerstruktur (3) herum angeordnet sind.

23. Reifen nach Anspruch 21, wobei die Unterlage (18) zumindest ein Streifensegment (35) aus Elastomermaterial mit einem Querschnitt, der im Wesentlichen dem Querschnitt der Unterlage (18) entspricht, umfasst, wobei das Streifensegment (35) einen ersten Endabschnitt (37a) und einen zweiten Endabschnitt (37b) umfasst, die miteinander an ihren Enden zusammengefügt sind, wobei die Endabschnitte (37a, 37b) eine Verbindungslinie untereinander aufweisen, die sich entlang eines hohlen Abschnitts (13) erstreckt, der in dem Laufflächenprofil zwischen in Umfangsrichtung benachbarten Blöcken (12) definiert ist.

24. Reifen nach Anspruch 21, wobei die Unterlage (18) zumindest ein Streifensegment (35) aus Elastomermaterial mit einem Querschnitt, der im Wesentlichen dem Querschnitt der Unterlage (18) entspricht, umfasst, wobei das Streifensegment (35) einen ersten Endabschnitt (37a) und einen zweiten Endabschnitt (37b) umfasst, die miteinander an ihren Enden zusammengefügt sind, wobei zumindest einer der Blöcke (12) von dem zweiten Endabschnitt (37b) der Unterlage (18) hervorsteht und gegen den ersten Endabschnitt (37a) der Unterlage (18) angelegt ist.

25. Reifen nach Anspruch 21, wobei die Unterlage (18) aus einem Elastomermaterial hergestellt ist, das sich von jenem unterscheidet, aus dem die Blöcke (12) hergestellt sind.

## Revendications

1. Processus de production de pneus, dans lequel une bande de roulement (7) en matériau élastomère brut est appliquée de manière circonférentielle autour d'une structure de support (3) incorporant des câblés de renforcement, de manière à former un pneu cru (2) soumis par la suite à un traitement de vulcanisation ;
dans lequel la bande de roulement (7) est formée par :
- la réalisation d'une sous-couche (18) en matériau élastomère brut ;
- la réalisation de blocs (12) en matériau élastomère brut ;
- l'application des blocs (12) mutuellement écartés selon un motif de bande de roulement prédéterminé, sur la sous-couche (18),
dans lequel ledit traitement de vulcanisation comprend :
- l'introduction du pneu (2) dans un moule (38) ayant des évidements de formation (39) correspondant aux blocs (12) respectifs du pneu (2) ; et
- l'alignement des blocs (12) avec les évidements de formation (39) respectifs avant de fermer le moule (38), de sorte que chaque bloc (12) soit engagé dans l'évidement de formation (39) respectif, à la suite de la fermeture du moule (38),
**caractérisé en ce qu'**avant le traitement de vulcanisation, au moins un indice de référence (41) indiquant la position angulaire des blocs (12) autour d'un axe de rotation géométrique (X) du pneu (2) est associé au pneu lui-même,
dans lequel l'alignement des blocs (12) avec les évidements de formation (39) respectifs est effectué en amenant ledit au moins un indice de référence (41) porté par le pneu (2) à coïncider avec une référence fixe.

2. Processus tel que revendiqué dans la revendication 1, dans lequel la sous-couche (18) est appliquée autour de la structure de support (3) avant l'application des blocs sur la sous-couche (18).

3. Processus tel que revendiqué la revendication 1 ou 2, dans lequel la sous-couche (18) est réalisée par extrusion d'au moins un élément allongé continu (22) en matériau élastomère brut et par enroulement circonférentiel dudit élément allongé continu (22) en une pluralité de bobines (22a) disposées mutuellement côte à côte autour de la structure de support (3).

4. Processus tel que revendiqué dans la revendication 1, dans lequel la sous-couche (18) est réalisée par extrusion d'au moins une bande continue (33) en matériau élastomère de section transversale correspondant sensiblement à la section transversale de la sous-couche (18), et par séparation d'un segment de bande (35) de longueur prédéterminée de ladite bande continue (33).

5. Processus tel que revendiqué dans la revendication 1, dans lequel la sous-couche (18) est appliquée autour de la structure de support (3) après l'application des blocs (12) sur la sous-couche (18).

6. Processus tel que revendiqué dans la revendication 4, dans lequel la séparation du segment de bande (35) est effectuée selon une ligne de coupe s'étendant le long d'une rainure ou de parties creuses définies dans le motif de bande de roulement entre des blocs contigus de manière circonférentielle.

7. Processus tel que revendiqué dans la revendication 4 ou 5, dans lequel des première et deuxième parties d'extrémité (37a, 37b) de la sous-couche (18) sont mutuellement reliées bout-à-bout suite à l'enroulement de la sous-couche (18) autour de la structure de support (3), dans lequel au moins l'un desdits blocs (12) fait saillie à partir de la deuxième partie d'extrémité (37b) de la sous-couche (18) et est appliqué contre la première partie d'extrémité (37a) de la sous-couche (18) au niveau de l'extrémité de l'enroulement de la sous-couche (18) autour de la structure de support (3).

8. Processus tel que revendiqué dans la revendication 1, dans lequel après la fabrication de la sous-couche (18), de la chaleur est fournie à la sous-couche (18) et/ou aux blocs, avant l'application des blocs (12) à la sous-couche (18) .

9. Processus tel que revendiqué dans la revendication 1, dans lequel au moins l'un desdits blocs (12) est réalisé par extrusion d'une barre continue (25) en matériau élastomère brut et séparation d'un segment de barre (27) de longueur prédéterminée de ladite barre continue (25).

10. Processus tel que revendiqué dans la revendication 1, dans lequel au moins l'un desdits blocs (12) est conformé par déformation plastique avant d'être appliqué à la sous-couche (18).

11. Processus tel que revendiqué dans la revendication 1, dans lequel lesdits blocs (12) sont appliqués à la sous-couche (18) au niveau d'une région supérieure du pneu (2), supportés selon un axe de rotation géométrique horizontal (X) .

12. Processus tel que revendiqué dans la revendication 1, dans lequel le matériau élastomère utilisé dans la réalisation de la sous-couche (18) a une composition différente de celle du matériau élastomère utilisé dans la réalisation des blocs (12).

13. Installation de fabrication de pneus, comprenant
- des dispositifs de réalisation d'une structure de support (3) incorporant des câblés de renforcement ;
- des dispositifs de formation d'une bande de roulement (7) ;
- des dispositifs de vulcanisation d'un pneu (2) comportant ladite bande de roulement (7) appliquée de manière circonférentielle autour de la structure de support (3) ;
dans laquelle les dispositifs de formation de la bande de roulement (7) comprennent :
un emplacement de formation de sous-couche (17) pour réaliser une sous-couche (18) en matériau élastomère brut ;
- un emplacement de formation de blocs (19) pour réaliser des blocs (12) en matériau élastomère brut ;
- un emplacement d'application de blocs (20) pour appliquer les blocs (12) sur la sous-couche (18), mutuellement écartés selon un motif de bande de roulement prédéterminé,
dans laquelle lesdits dispositifs de vulcanisation du pneu (2) comprennent :
- un moule (38) ayant des évidements de formation (39) correspondant à des blocs (12) respectifs du pneu (2), **caractérisée en ce qu'**elle comprend en outre :
- des dispositifs pour associer au pneu (2) au moins un indice de référence (41) indiquant la position angulaire des blocs (12) autour d'un axe géométrique du pneu, disposé de manière fonctionnelle en amont des dispositifs de vulcanisation du pneu (2),
lesdits dispositifs de vulcanisation du pneu (2) comprenant en outre :
- des indices de référence pour l'alignement des blocs (12) avec les évidements de formation (39) respectifs avant de fermer le moule (38), de sorte que chaque bloc (12) soit engagé dans l'évidement de formation (39) respectif à la suite de la fermeture du moule (38).

14. Installation telle que revendiquée dans la revendication 13, dans laquelle l'emplacement de formation de blocs (19) comprend un ensemble de distribution de barre (24) pour fournir une barre continue (25) en matériau élastomère brut et des dispositifs de coupe (26) pour découper des segments de barre (27) de longueur prédéterminée de ladite barre continue (25).

15. Installation telle que revendiquée dans la revendication 13, dans laquelle l'emplacement d'application de blocs (20) comprend une surface de repos (36) pour la sous-couche (18) et un dispositif de manipulation (28) pour la pose des blocs (12) sur la sous-couche (18) supportée par la surface de repos (36).

16. Installation telle que revendiquée dans la revendication 13, dans laquelle l'emplacement d'application de blocs (20) comprend un dispositif de manipulation (28) pour la pose des blocs (12) sur la sous-couche (18) appliquée autour de la structure de support (3) du pneu (2) .

17. Installation telle que revendiquée dans la revendication 15 ou 16, dans laquelle ledit dispositif de manipulation (28) comprend une pince (28a) ayant des mâchoires (29) mobiles entre un état ouvert dans lequel elles sont mutuellement écartées et un état fermé dans lequel elles sont mutuellement rapprochées de manière à définir un siège concave (29a) dont la forme correspond à celle de l'un desdits blocs (12).

18. Installation telle que revendiquée dans la revendication 15 ou 16, dans laquelle ledit dispositif de manipulation (28) comprend un élément de pression (30) pour comprimer les blocs (12) contre une surface extérieure (18a) de la sous-couche (18).

19. Installation telle que revendiquée dans la revendication 13, dans laquelle lesdits indices de référence comprennent une référence fixe pouvant être rendue coïncidente avec au moins un indice de référence (41) porté par le pneu (2) et indiquant la position angulaire des blocs (12) autour d'un axe de rotation géométrique (X) du pneu lui-même.

20. Installation telle que revendiquée dans la revendication 13, dans laquelle lesdits évidements de formation (39) sont définis dans des secteurs respectifs (40) qui peuvent être déplacés de manière centripète l'un près de l'autre simultanément avec la fermeture du moule (38) .

21. Pneu cru pour roues de véhicule comprenant une bande de roulement (7) en matériau élastomère disposé de manière circonférentielle autour d'une structure de support (3) incorporant des câblés de renforcement,
dans lequel la bande de roulement (7) comprend :
- une sous-couche (18) s'étendant de manière circonférentielle autour de la structure de support (3) ;
- une pluralité de blocs (12) mutuellement écartés selon un motif de bande de roulement prédéterminé et ayant chacun une surface de fixation (12a) appliquée contre une surface extérieure (18a) de la sous-couche (18), **caractérisé en ce qu'**il comprend en outre au moins un indice de référence (41) indiquant la position angulaire des blocs (12) autour d'un axe de rotation géométrique (X) du pneu (2).

22. Pneu tel que revendiqué dans la revendication 21, dans lequel la sous-couche (18) comprend au moins un élément allongé continu (22) en matériau élastomère brut s'étendant de manière circonférentielle en une pluralité de bobines (22a) disposées mutuellement côte à côte autour de la structure de support (3).

23. Pneu tel que revendiqué dans la revendication 21, dans lequel la sous-couche (18) comprend au moins un segment de bande (35) en matériau élastomère de section transversale correspondant sensiblement à la section transversale de la sous-couche (18), dans lequel ledit segment de bande (35) a une première partie d'extrémité (37a) et une deuxième partie d'extrémité (37b) mutuellement reliées bout-à-bout, dans lequel lesdites parties d'extrémité (37a, 37b) ont une ligne de connexion mutuelle s'étendant le long d'une partie creuse (13) définie dans le motif de bande de roulement entre des blocs contigus de manière circonférentielle (12).

24. Pneu tel que revendiqué dans la revendication 21, dans lequel la sous-couche (18) comprend au moins un segment de bande (35) en matériau élastomère de section transversale correspondant sensiblement à la section transversale de la sous-couche (18), dans lequel ledit segment de bande (35) a une première partie d'extrémité (37a) et une deuxième partie d'extrémité (37b) mutuellement reliées bout-à-bout, dans lequel au moins l'un desdits blocs (12) fait saillie à partir de la deuxième partie d'extrémité (37b) de la sous-couche (18) et est appliqué contre la première partie d'extrémité (37a) de la sous-couche (18).

25. Pneu tel que revendiqué dans la revendication 21, dans lequel la sous-couche (18) est réalisée en un matériau élastomère différent de celui dont sont réalisés les blocs (12) .
